Europäisches Patentamt

European Patent Office

Office européen des brevets

(11) Veröffentlichungsnummer: **0 291 737**
**A1**

(12) **EUROPÄISCHE PATENTANMELDUNG**

(21) Anmeldenummer: 88106762.3

(22) Anmeldetag: 27.04.88

(51) Int. Cl.⁴: **B27B 1/00**

(30) Priorität: 21.05.87 DE 3717124

(43) Veröffentlichungstag der Anmeldung:
**23.11.88 Patentblatt 88/47**

(84) Benannte Vertragsstaaten:
**AT DE FR IT NL SE**

(71) Anmelder: **Lüning, Horst Dipl.-Ing.,**
**Ledererweg 9**
**D-8427 Siegenburg 1(DE)**

(72) Erfinder: **Lüning, Horst Dipl.-Ing.,**
**Ledererweg 9**
**D-8427 Siegenburg 1(DE)**

(74) Vertreter: **Bohnenberger, Johannes, Dr. et al**
**Meissner, Bolte & Partner**
**Widenmayerstrasse 48 Postfach 86 06 24**
**D-8000 München 86(DE)**

(54) **Verfahren zum Steuern ferneinstellbarer Sägen.**

(57) In Sägewerken mit verstellbaren Sägen (13) ist man bisher nur in der Lage, vorsortierte Stammabschnitte losweise zu verarbeiten. Ein individuelles Schneiden ist nicht möglich, es entsteht darüber hinaus viel Abfall bzw. eine große Anzahl minderwertiger Nebenerzeugnisse. Es wird vorgeschlagen, im wesentlichen direkt vor dem Sägen die Stammquerschnitte über die Länge jedes, den Sägen zugeführten Stammes abzutasten (17), zu speichern und mit den Daten gewünschter Erzeugnisse derart zu vergleichen, daß die Dimensionen der nach einem Herausschneiden eines gewünschten Haupterzeugnisses verbleibenden Stammabschnitte gespeichert werden, daß die Daten der möglichen Nebenerzeugnisse mit den Dimensionen der verbleibenden Stammabschnitte derart verglichen werden, daß die mögliche Anzahl möglichst hochwertiger Nebenerzeugnisse bei möglichst niedrigen Schnittkosten gespeichert werden und daß aus den so ermittelten Optimaldaten die Verstellwerte zum Einstellen der Sägen (13) ermittelt und gespeichert werden. Danach werden die Sägen (13) gemäß den ermittelten Daten (von der Stammaußenseite beginnend) eingestellt und die Stämme geschnitten.

Fig. 9

## Verfahren zum Steuern ferneinstellbarer Sägen

Die Erfindung betrifft ein Verfahren nach dem Oberbegriff des Patentanspruches 1 sowie eine Sägeanlage zur Durchführung des Verfahrens nach dem Oberbegriff des Patentanspruches 7.

In Sägewerken werden seit langer Zeit Gatteranlagen verwendet, bei denen die einzelnen Sägen entsprechend einem individuellen Auftrag eines Kunden (Zimmerer, Schreiner) zum Einschneiden des gewünschten Haupterzeugnisses (Bauholz, Blockware) eingestellt werden. Über weitere, voreingestellte Blätter des Gatters wird das Nebenerzeugnis bestimmt, das sich aus dem Rest (Stammquerschnitt abzüglich Haupterzeugnis) ergeben soll. Diese Gattersägewerke weisen aufgrund der verwendeten Gatteranlagen eine begrenzte Kapazität auf, die bei ca. 30.000 Festmeter Rundholz pro Jahr liegt. Die Begrenzung der Kapazität rührt zum einen aus der relativ niedrigen Schnittgeschwindigkeit von Gattersägen, zum anderen aus der Tatsache, daß die Umstellung der Sägen auf die verschiedenen Dimensionen eines gewünschten Haupterzeugnisses relativ lang dauert. Weiterhin wird die Kapazität solcher Sägewerke dadurch beschränkt, daß nach dem Aussuchen der zu einem Auftrag passenden Stämme auf dem Rundholzplatz diese in einer festgelegten Reihenfolge (gegebenenfalls zwischengelagert und) der Säge zugeführt werden müssen, damit diese nur möglichst selten auf die verschiedenen Abmessungen eingestellt werden muß.

Es sind weiterhin Sägewerke mit Bandsägen oder mit Kreissägen bekannt, die wesentlich höhere Schnittgeschwindigkeiten (bis 120m/min) haben, und die im Sekundenbereich hinsichtlich der Schnittlage einstellbar sind. Da diese Sägen aber außerordentlich teuer sowohl hinsichtlich der Anschaffung als auch hinsichtlich der Betriebskosten sind, muß eine ständige Auslastung der Anlage gegeben sein. Um dies zu erzielen, produziert man auf derartigen Anlagen im wesentlichen ausschließlich Massensortimente, so daß individuelle Aufträge nur dann erfüllt werden können, wenn diese zufällig mit den auf Vorrat geschnittenen Sortimenten übereinstimmen.

Es wurde auch vorgeschlagen, nach dem Aussuchen von Stämmen und Zuordnen dieser Stämme zu einem individuellen Auftrag zu allen (gegebenenfalls ausgelängten) Stammabschnitten gehörende Sägedaten an die Säge zu übertragen und die ausgewählten Stammabschnitte einen nach dem anderen entsprechend dem Auftrag einzuschneiden. Die Verbindung des Rundholzplatzes, auf dem das Aussuchen stattfindet, mit der Säge erfordert jedoch einen sehr hohen Aufwand an Förderern. Weiterhin schlägt jede Verzögerung auf dem Rundholzplatz oder auf dem Förderer auf die Säge durch, da diese keinen neuen einzuschneidenden Stamm nachgeliefert bekommt, was die Ausnutzung der Säge wesentlich senkt. Darüber hinaus ist bei einer solchen Verbindung die Holzausbeute nicht optimal, da immer das vorliegende Rundholz verarbeitet werden muß und keine Stammabschnitte zwischengelagert werden können.

Beiden vorgenannten Verfahren bzw. Anlagen ist gemeinsam, daß im Durchschnitt relativ viel Abfall dadurch entsteht, daß Nebenerzeugnisse unverkäuflicher Abmessungen bzw. Qualität entstehen, da die Sägen bei vorgegebenem Haupterzeugnis auf immer dasselbe Nebenerzeugnis (z.B. Bretter bestimmter Dicken) eingestellt bleibt.

Ausgehend vom oben genannten Stand der Technik ist es Aufgabe der vorliegenden Erfindung, ein Verfahren und eine Vorrichtung der eingangs genannten Art dahingehend weiterzubilden, daß bei verringertem Aufwand und dadurch erhöhter Betriebssicherheit auch individuelle Aufträge mit erhöhter Arbeitsgeschwindigkeit durchführbar sind.

Diese Aufgabe wird durch die im Kennzeichen des Anspruches 1 verfahrensmäßig, durch die im Kennzeichen des Anspruches 7 angegebenen Merkmale vorrichtungsmäßig gelöst.

Ein ganz wesentlicher Punkt der Erfindung liegt hierbei darin, daß der Stammquerschnitt im wesentlichen direkt vor dem Sägen abgetastet, das Ergebnis gespeichert, mit den Daten der gewünschten (Haupt-) Erzeugnisse verglichen und danach die Sägen eingestellt werden. Die Einstellung erfolgt hierbei derart, daß die Nebenerzeugnisse, die nach dem Ausschneiden des Haupterzeugnisses aus dem Stammabschnitt herstellbar sind, hinsichtlich ihrer Dimensionen (Dicke, Länge, usw.) optimiert werden. D.h. also, daß zwei nacheinander eingeschnittene Stämme, welche dieselbe Hauptware, z.B. ein Kantholz ergeben, nicht notwendigerweise zu denselben Nebenerzeugnissen führen, wenn die Stämme unterschiedliche Querschnittsformen und/oder Krümmungen aufweisen.

Der Begriff, daß die Stammquerschnitte über ihre Länge direkt vor dem Sägen abgetastet (usw.) werden, soll hierbei ausdrücken, daß bei Einlaufen eines Stammes in die Säge dessen Daten vorliegen und dem (individuellen) Stamm zugeordnet werden können. Die räumliche Entfernung spielt also keine Rolle.

Weitere erfindungswesentliche Merkmale ergeben sich aus den Unteransprüchen und den nachfolgenden Ausführungsbeispielen bevorzugter Ausführungsformen der Erfindung, die anhand von Abbildungen näher erläutert werden. Hierbei zeigen:

Fig. 1 schematisierte Stammquerschnitte mit eingezeichneten, verschiedenen Haupterzeugnissen;

Fig. 2 eine schematisierte Stamm-Seitenansicht zur Verdeutlichung der "Pfeilhöhe" bei gekrümmten Stämmen;

Fig. 3 eine Teil-Seitenansicht eines Erd-Stammabschnittes zur Definition der Baumkante eines Brettes;

Fig. 4 eine schematisierte Ansicht zur Darstellung möglicher Nebenerzeugnisse bei kreisrundem Stammquerschnitt;

Fig. 5 perspektivische Darstellungen zur Erläuterung von Einschnitten gekrümmter und ovaler Stämme;

Fig. 6A und 6B einen Datenflußplan zur Erläuterung des erfindungsgemäßen Verfahrens;

Fig. 7 schematisierte Schnittbilder;

Fig. 8 Seitenansichten zur Erläuterung von Kappschnitten an der Säge und am Doppelbesäumer zur Erzielung verschiedener Erzeugnisse; und

Fig. 9 eine schematisierte (Block-) Darstellung einer bevorzugten Ausführungsform der erfindungsgemäßen Sägeanlage.

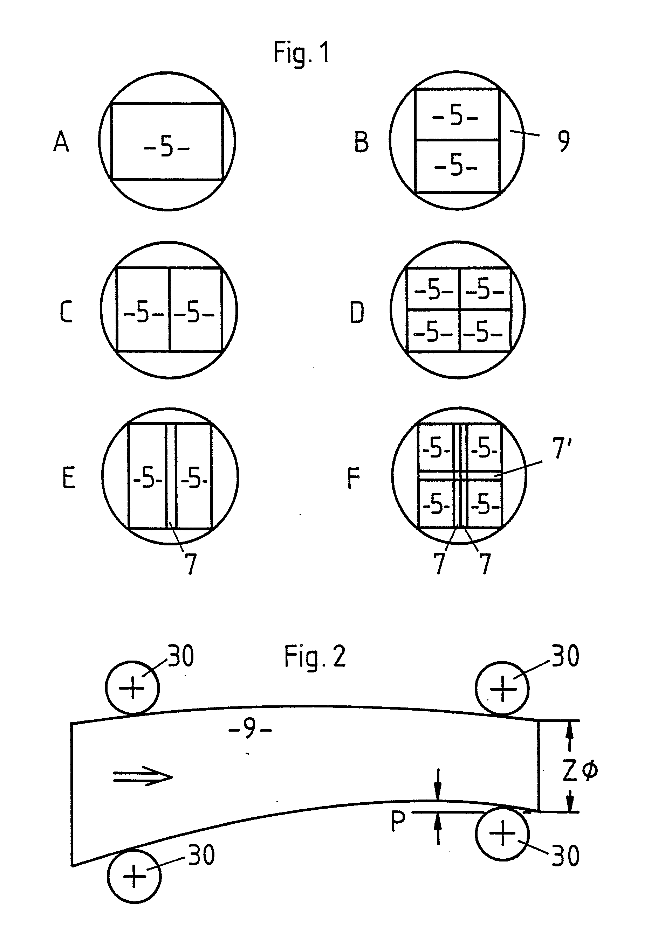

In Fig. 1 sind Querschnitte verschiedener Fertigwaren aufgezeigt, die sich bei verschiedenen Einschnittarten ergeben können. Man kann also einstielig (Fig.1A), zweistielig (Fig. 1B und 1C) oder Z.B. auch vierstielig (Fig. 1D) schneiden. Die Hauptware besteht hier aus Kanthölzern 5. Bei den in den Fig. 1E und 1F gezeigten Schnittbildern werden neben den Kanthölzern 5 als Hauptware noch Kernbretter 7, 7' gewonnen, die ebenfalls als Hauptware oder (falls eine solche im Auftrag nicht enthalten ist) als Nebenware erzeugbar ist. Bei diesen Abbildungen wird aber von idealen Verhältnissen (kreisrunder Stammquerschnitt, gleichmäßiger Durchmesser auf die Gesamtlänge) ausgegangen, die eigentlich nie vorliegen.

Beim erfindungsgemäßen Verfahren wird somit die tatsächliche Form des einzuschneidenden Stammes 9 berücksichtigt, der eine durch die "Pfeilhöhe" P definierbare Krümmung aufweist und dessen Zopfdurchmeser $Z\theta$ geringer ist als der Durchmesser des Erdstammes.

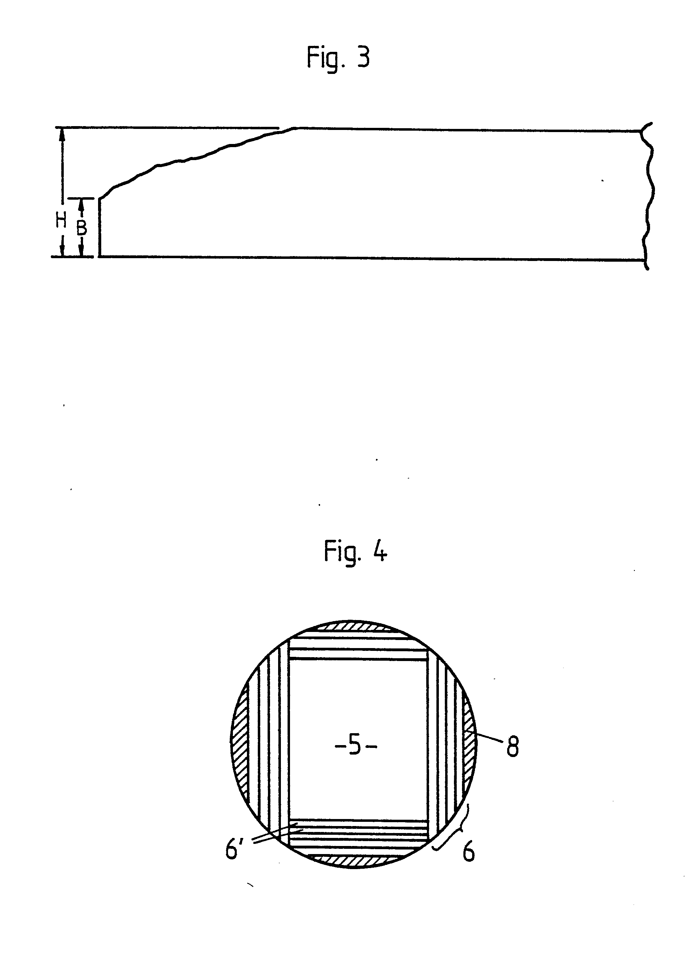

In Fig. 3 ist zur Verdeutlichung der nachfolgenden Beschreibung noch die Baumkante B definiert, die sich an einem Brett mit der Dicke H ergibt, das bei randseitigen Einschnitten entsteht.

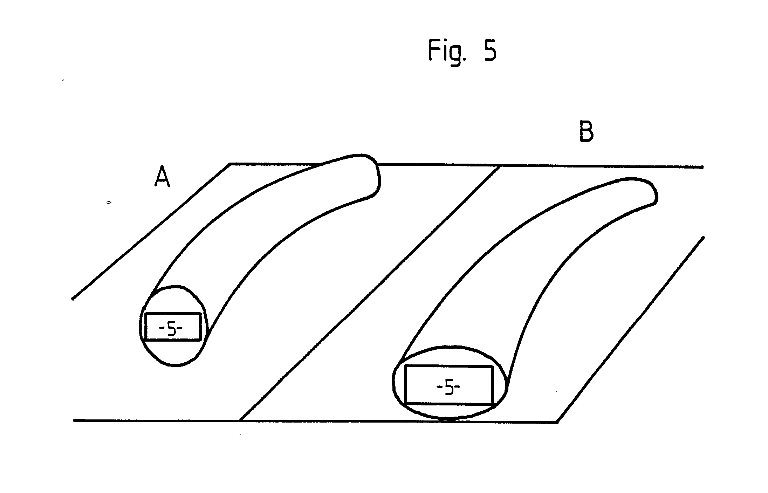

In Fig. 4 ist ein (kreisrunder) Stammquerschnitt gezeigt, aus dem als Haupterzeugnis 5 Kantholz mit quadratischem Querschnitt ausgeschnitten werden kann. Bei diesem Ausschneiden können bei Anwendung des erfindungsgemäßen Verfahrens Nebenerzeugnisse (Bretter) entstehen, die verschiedene Dicken und Breiten haben, wie dies mit den Bezugsziffern 6 und 6' verdeutlicht ist. Die Schwarte (die wie weiter unten beschrieben, abgefräst wird), ist in dieser Darstellung mit der Bezugsziffer 8 versehen.

Bei den vorangegangenen Darstellungen werden die Ovalität und die Krümmung des Stammes nicht berücksichtigt, die in Fig. 5 gezeigt ist. Zur Erzielung optimaler Ergebnisse wird beim erfindungsgemäßen Verfahren die Einschnittlage für eine gewünschte Kantholz 5 in bezug auf die Ovalität und die Krümmung des zu behandelnden Stammabschnittes berücksichtigt.

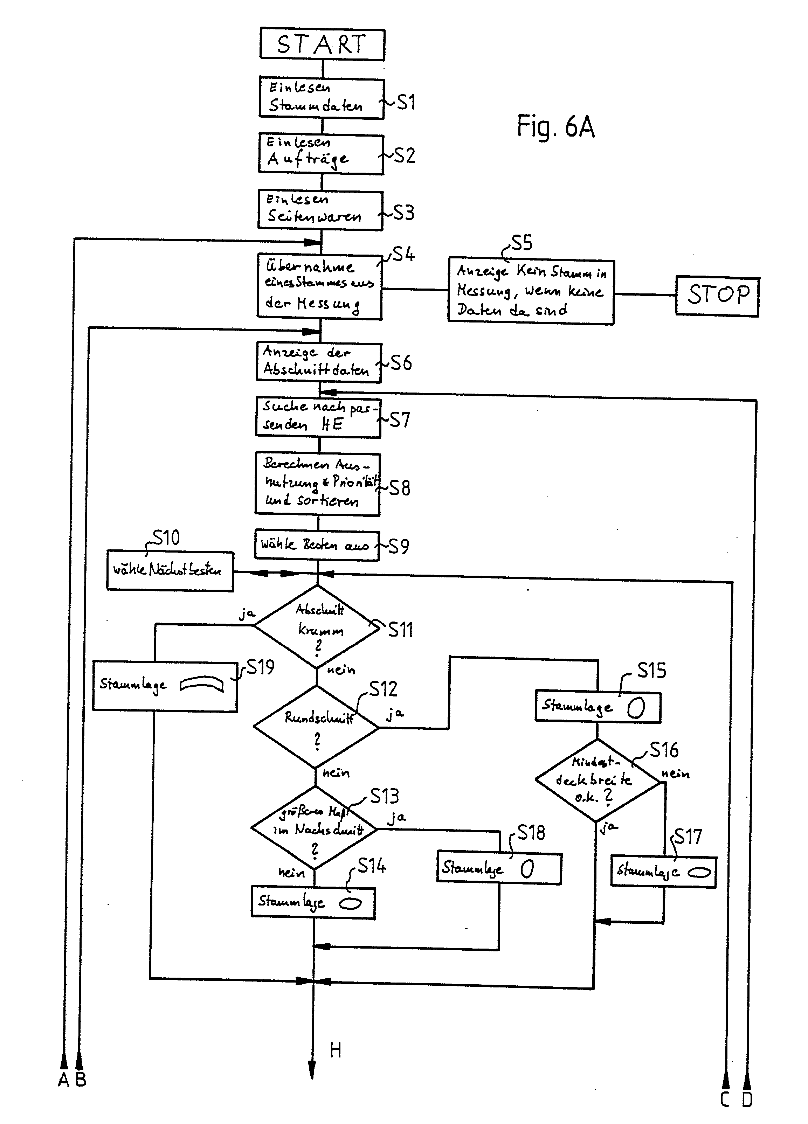

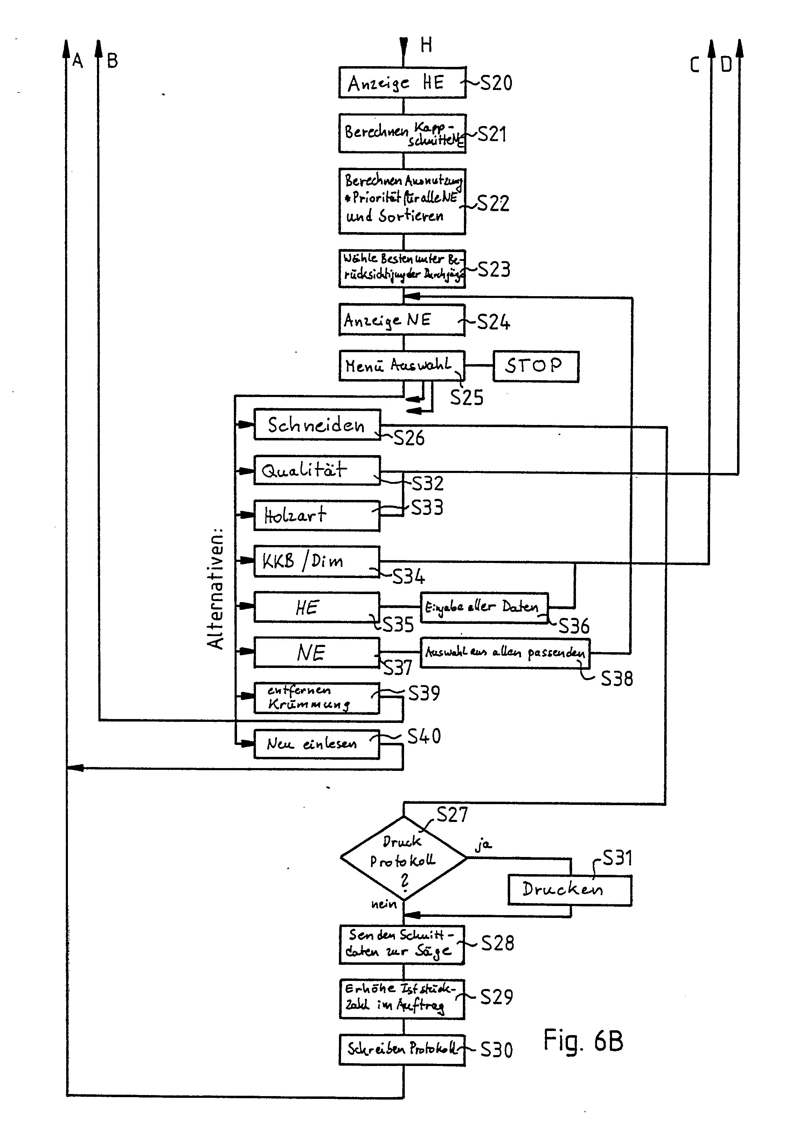

Im folgenden wird das erfindungsgemäße Verfahren anhand der Fig. 6A/B näher erläutert.

Nach dem Start des Verfahrens werden in einem Schritt S1 Stammdaten eingegeben, die Z.B. die Kosten der Anlage pro Einschnitt, die erzielbaren Preise für Nebenerzeugnisse usw. betreffen.

In einem darauf folgenden Schritt S2 werden abzuarbeitende Aufträge (z.B. ein Dachstuhl) eingegeben.

In einem Schritt S3 werden die Daten möglicher, auf dem Markt absetzbarer Nebenerzeugnisse eingegeben, z.B. Grundabmessungen (Dicke, Breite, Länge, Güteklassen) von Brettern.

In einem Schritt S4 werden Meßdaten von einem Meßsystem übernommen, durch den zuvor ein Stamm gefördert wurde. Liegen keine solchen Daten vor, so bedeutet dies, daß noch kein Stamm zu schneiden ist, so daß in einem Schritt S5 eine entsprechende Anzeige erfolgt und das Verfahren zunächst angehalten wird.

Liegen Meßdaten vor, so werden automatisch in einem Schritt S6 Abschnittdaten angezeigt. Daraufhin werden in einem Schritt S7 die Meßdaten mit gespeicherten Auftragsdaten (Schritt S2) verglichen und es wird ein zu den Daten des gerade vermessenen Stammes passendes Haupterzeugnis HE herausgesucht. In einem darauf folgenden Schritt S8 wird die Ausnutzung berechnet. Gegebenenfalls wird hierbei eine zuvor (Schritt S2) vorgegebene Priorität mit berücksichtigt, die aussagt, daß trotz geringerer Ausnutzung ein bestimmtes Haupterzeugnis unbedingt entstehen muß, damit ein Auftrag fristgerecht erfüllt werden kann.

In einem Schritt S9 wird aus den ausgewählten Möglichkeiten die beste herausgesucht.

In einem Schritt S11 wird aus den gemessenen Daten hergeleitet, ob der zuvor vermessene Stammabschnitt krumm ist oder nicht. Wenn nein, so wird in einem Schritt S12 entschieden, ob ein Rundschnitt (z.B. Blockware) vorliegt. wenn nein, so wird in einem Schritt S13 entschieden, ob das gewünschte Haupterzeugnis zu einem größeren Maß im Nachschnitt führt oder nicht, woraufhin in Schritten S14 bzw. S18 die Stammlage bezüglich der Ovalität definiert wird, welche den günstigsten Einschnitt ergibt.

Wurde im Schritt S12 festgestellt, daß ein Rundschnitt vorliegt, so wird in den Schritten S15 bis S17 die Stammlage auf Ovalität überprüft und gegebenenfalls dem Rundschnitt angepaßt.

Nach Überprüfen der Stammlage in den Schritten S14 oder S17 bzw. dann, wenn im Schritt S11 der Abschnitt als krumm festgestellt wurde und danach im Schritt S19 die Stammlage definiert wurde, wird in einem Schritt S20 das sich aus dem Stamm ergebende Haupterzeugnis angezeigt. Daraufhin werden in einem Schritt S21 die Kappschnitte für Nebenerzeugnisse berechnet und in einem Schritt S22 die Ausnutzung (gegebenenfalls unter Berücksichtigung einer Priorität) für alle möglichen Nebenerzeugnisse festgestellt. In einem darauf folgenden Schritt S23 wird die optimale Kombination für alle Nebenerzeugnisse unter Berücksichtigung des angezeigten Haupterzeugnisses und unter weiterer Berücksichtigung der Anzahl durchzuführender Schnitte ausgewählt. Daraufhin wird in einem Schritt S24 angezeigt, welche Nebenerzeugnisse ausgewählt wurden. In einem Schritt S25 wird dem Benutzer die Möglichkeit gegeben, entweder nun den Schneidvorgang in einem Schritt S26 einzuleiten, oder anstelle dessen in Schritten S32 bis S40 veränderte Daten einzugeben bzw. den Vorgang vollständig neu ablaufen zu lassen (Schritt S40). Es ist auch möglich, im Schritt S25 direkt (ohne einzugreifen) zum Schritt S26 weiterzugehen.

Wurde der Schritt S26 (Schneiden) ausgewählt, so wird gegebenenfalls in einem Schritt S27 gefragt, ob ein Protokoll gedruckt werden soll. Wenn ja, so wird in einem Schritt S31 ein Protokoll gedruckt. Wenn nein, so werden in einem Schritt S28 die zuvor hergeleiteten Schnittdaten an die Säge weitergegeben und der Schnitt durchgeführt.

Daraufhin wird in einem Schritt S29 die Abarbeitung des Auftrages dadurch berücksichtigt, daß die Ist-Stückzahl im Auftrag um den entsprechenden Betrag erhöht wird.

Daraufhin wird im Schritt S30 ein Protokoll erstellt und wieder zum Schritt S4 zurückgesprungen, so daß nun wieder die Übernahme der gemessenen Daten eines Stammes abgewartet wird.

An dieser Stelle wird darauf hingewiesen, daß das in den Fig. 6A und 6B beispielhaft gezeigte Flußdiagramm die erfindungswesentlichen Verknüpfungen der Schritte verdeutlicht.

Darüber hinaus sei darauf hingewiesen, daß über die Schritte S12 bis S18 eine Drehung des Stammes (mit einer nicht gezeigten Vorrichtung) ermöglicht wird, so daß das geforderte Haupterzeugnis aus dem Stamm herausschneidbar ist.

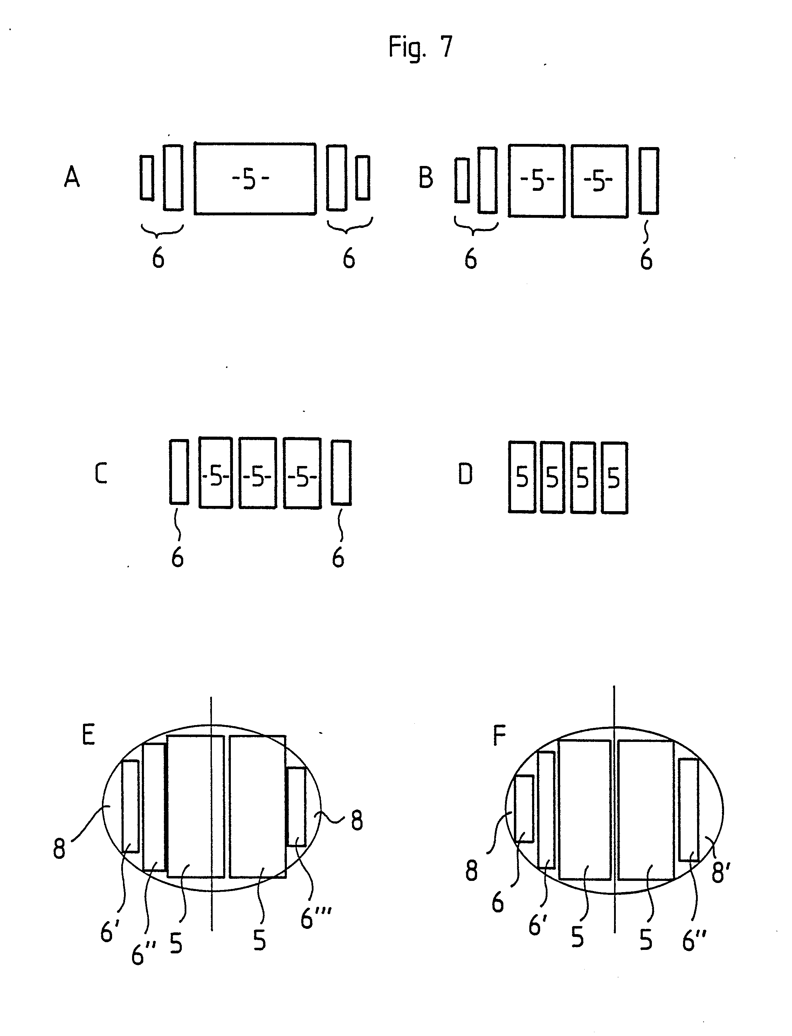

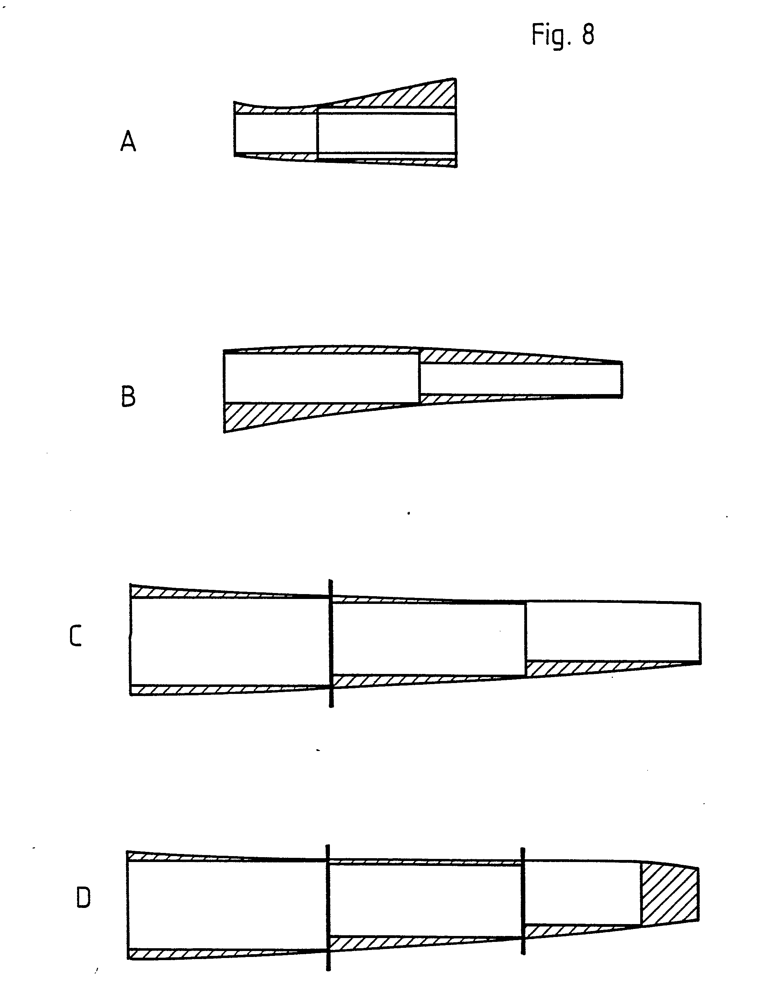

Im folgenden wir die Optimierung beim Heraussuchen passender Haupterzeugnisse (Schritte S7 bis S19) und die Herleitung der optimalen Nebenerzeugnisse (Schritte S21 bis S24) anhand der Fig. 7 und 8 näher erläutert.

Wenn ein Stamm gleichmäßig oval ist, so kann bei einem vorgegebenen (Vierkant-) Haupterzeugnis 5 eine symmetrische Anordnung von Nebenerzeugnissen 6, wie in Fig. 7A gezeigt, zu einem optimalen Ergebnis führe. Ist jedoch der Stamm nicht gleichmäßig (symmetrisch) oval, so ergibt sich ein optimales Schnittbild wie in Fig. 7B gezeigt. Die Fig. 7C und 7D zeigen weitere, symmetrische Schnittbilder, die je nach gewünschtem Haupterzeugnis zu optimalen Schnittbildern führen.

Durch die Eingabe der Stammdaten im Schritt S1 sowie der gewünschten Nebenerzeugnisse (Schritt S3) ist es möglich, daß bei einer bestimmten Stammform und einem bestimmten Haupterzeugnis 5 ein wie in Fig. 7B gezeigtes Schnittbild optimal hinsichtlich der Wertschöpfung ist, da die Kosten für einen Schnitt den erzielbaren Preis für das entstehende Nebenerzeugnis übersteigen.

Ein weiterer wesentlicher Vorteil des erfindungsgemäßen Verfahrens liegt darin, daß wie in Fig. 7E und 7F gezeigt, auch unsymmetrische Schnittbilder und damit auch gegebenenfalls unsymmetrische Schwarten 8, 8′ (siehe Fig. 7F) erzielbar sind, die zu einer noch höheren Wertschöpfung führen.

Ein weiterer wesentlicher Vorteil, der durch das erfindungsgemäße Verfahren erzielbar ist, wird im folgenden anhand von Fig. 8 beschrieben. Hierbei dreht es sich insbesondere darum, daß nicht nur die Lage der Einschnitte, sondern auch die Lage der Kappschnitte und die Einschnitte des Besäumers über das erfindungsgemäße Verfahren in optimaler Weise einstellbar sind, da die Querschnittswerte des zu sägenden Stammes direkt vor der Bearbeitung gemessen werden. Betrachtet man sich beispielsweise den gekrümmten Stamm gemäß Fig. 8A, so erkennt man an den durchgezogenen Linien des schmaleren Brettes, daß zunächst von einem einzigen schmaleren Schnitt auszugehen ist, wenn man nicht den Querschnittsverlauf über die gesamte Stammlänge direkt vor dem Sägen mißt. Dadurch aber, daß eben dieser Querschnittsverlauf vorliegt, kann ein kurzes schmales Brett und ein langes breites Brett ausgesägt werden, was die Wertschöpfung ganz wesentlich erhöht.

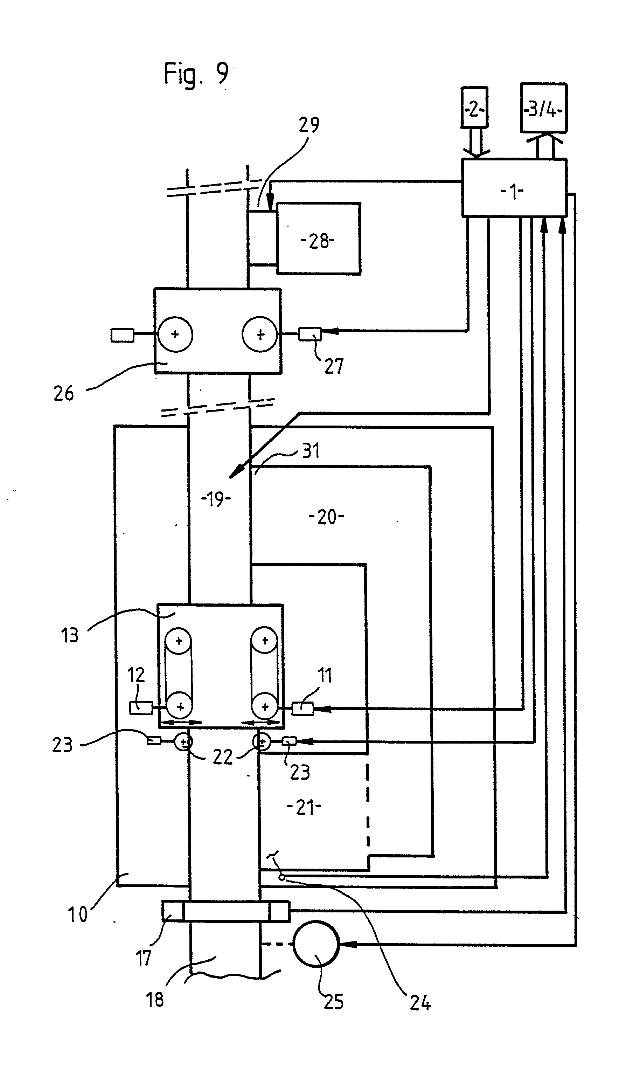

Die erfindungsgemäße Sägeanlage wird im folgenden anhand von Fig. 9 beschrieben.

Vor der eigentliche Säge 10, die eine Sägeeinheit 13, bestehend aus mindestens einer Band- oder Kreissäge umfaßt, welche über Einstellelemente 11 und 12 hinsichtlich der Schnittlage einstellbar ist, ist ein Meßrahmen 17 vorgesehen, durch welchen ein zu bearbeitender Stamm mittels eines Zuführförderers 18 durchführbar ist. An dieser Stelle muß darauf hingewiesen werden, daß unter dem Begriff "Meßrahmen" jede Art von Meßvorrichtung zu verstehen ist, über die eine dreidimensionale Vermessung des Stammes mit nachfolgender (gleichzeitiger) Weitergabe der Meßdaten möglich ist. Zwischen dem Meßrahmen 17 und der Sägeeinheit 13 sind randseitig Fräser 22 vorgesehen, die ebenfalls über Einstellelemente 23 einstellbar sind und zum Abfräsen von Schwarte 8 (siehe Fig. 4) dienen. Weiterhin ist es möglich, an dieser Stelle oder auch vor dem Meßrahmen 17 Vorrichtungen zum Entrinden (Endstammreduzierung) vorzusehen.

Das Model wird über einen Abführförderer 19 aus der Sägeeinheit 13 herausgefördert und über eine Weiche 31 einem Rückführförderer 20 (nach Drehung um die Längsachse um 90°) zugeführt, der den Model entgegen der Förderrichtung des Zuführförderers 18 und des Abführförderers 19 zurück zu einem Pufferspeicher 21 transportiert, wo der Model auf den nächsten Schnitt "wartet".

Damit die Sägeanlage 10 voll ausgelastet ist, wird im Zwischentaktbetrieb gearbeitet, d.h., zwischen mehreren bereits (mindestens) einmal geschnittenen Modeln wird immer wieder ein neuer Stamm zugeführt, wobei die Taktrate der Neuzuführung über die Anzahl der notwendigen Schnitte (und der dafür zur Verfügung stehenden Sägeeinheiten 13) bestimmt wird. Nachdem die Anzahl der notwendigen Schnitte nach Durchgang eines Stammes durch den Meßrahmen 17 festliegt, kann somit die Taktrate störungsfrei eingestellt werden.

Sobald an einem Stamm die vorgesehene Anzahl von Schnitten durchgeführt wurde, gelangt die so geschnittene Ware über den Abführförderer 19 (bei entsprechender Stellung der Weiche 31) zu einem Doppelbesäumer 26, dessen Kreissägen über Einstellelemente 27 einstellbar sind. Die aus dem Doppelbesäumer 26 kommenden fertigen Bretter werden über eine entsprechend gesteuerte Weiche 29 in einer Box 28 abgelegt. Die "Box" 28 steht hierbei für eine Sortieranlage mit einer Vielzahl von Boxen.

Die Förderer 18, 19 und 20 werden über Motoren getrieben, von denen nur der Motor 25 für den durch den Meßrahmen 17 führenden Förderer 28 - schematisiert dargestellt ist. Sämtliche Motoren erhalten ihre Steuerbefehle von einem Rechner 1, der eine Eingabetastatur 2 und eine Ausgabeeinheit bestehend aus Bildschirm 3 und Drucker 4 aufweist. Dem Rechner 1 werden weiterhin über Meßfühler 24, von denen nur einer am Pufferspeicher 21 eingezeichnet ist, Signale über die ordnungsgemäße Position bzw. einen Durchgang von Stämmen bzw. Abschnitten zugeführt, so daß die Lage aller zu einem durch den Meßrahmen 17 geführten Stamm gehörenden Abschnitte in der Gesamtanlage dem Rechner 1 "bekannt" ist.

Weiterhin ist der Rechner 1 über Steuerleitungen mit den Verstellelementen 23 der Fräsen 22, den Verstellelementen 11 und 12 der Sägeeinheit 13, mit den Weichen 31 und 29 und mit den Verstellelementen 27 des Doppelbesäumers 26 verbunden, so daß nach Messen eines Stammes im Meßrahmen 17 und Herleitung der günstigsten Schnittmaße die notwendigen Einstellungen über den Rechner 1 durchführbar sind.

Fig. 9 ist lediglich eine schematische Darstellung, die keineswegs alle Elemente der Anlage zeigt. Diese an sich bekannten Elemente umfassen beispielsweise weitere Weichen zum Abführen von Abfall, zum Auftrennen von Haupt- und Nebenerzeugnis oder auch die (anhand von Fig. 8 in ihrer Wirkung) beschriebene(n) Kappsäge(n).

Weiterhin ist darauf hinzuweisen, daß der Rückführförderer 20 mit seinem Pufferspeicher 21 dann entfallen kann, wenn eine genügend große Anzahl von Sägeeinheiten 13 hintereinander angeordnet ist, so daß die Maximalzahl von Schnitten in einem Durchgang (durch mehrere Sägeeinheiten 13) durchführbar ist.

Weiterhin ist die Anordnung einer weiteren Kappsäge hinter der Sägeeinheit 13 von Vorteil, wie sich aus den Schnittbeispielen gemäß Fig. 8 ergibt.

Bei einer hier nicht gezeigten, bevorzugten Ausführungsform der Sägeanlage, ist ein weiteres Meßsystem vorgesehen, das mit dem Rechner 1 verbunden ist. Dieses Meßsystem ist auf dem Rundholzplatz installiert und ermöglicht es, einen in den Rechner 1 über die Tastatur 2 eingegebenen Auftrag durch Zuordnen einer Gruppe von Stämmen vor-auszusuchen, wobei diese Gruppe von Stämmen dann in einem Zwischenspeicher (Box) zwar dem Auftrag entsprechend, ansonsten aber ungeordnet abgelegt werden kann. Werden die Stämme aus dieser Box nun dem Meßrahmen 17 zugeführt, so daß die Querschnittsprofile der Stämme in den Rechner 1 eingelesen werden, so können die eingelesenen Daten mit den bereits gespeicherten Daten gemäß Messung auf dem Rundholzplatz verglichen werden, wodurch eine "Wiedererkennung" der Stämme möglich ist und eine selbsttätige Zuordnung der in die Sägeanlage eingebrachten Stämme zum zuvor eingegebenen Auftrag durchführbar ist. Als Parameter dient hierzu z.B. der Zopfdurchmesser, das Pfeilmaß P (siehe Fig. 2), die Ovalität usw..

Im folgenden wird unter Bezug auf die vorhergehende Beschreibung und die beiliegenden Abbildungen der Funktionsablauf des erfindungsgemäßen Verfahrens nochmals an einem Beispielstamm zusammengefaßt.

Der auf dem Rundholzplatz ausgeschnittene Stammabschnitt wird auftragsbezogen in einer Box des Rundholzplatzes abgelegt. Mit allen anderen Stammabschnitten aus dieser Box, die man zweckmäßigerweise nach Aufträgen anstatt nach Durchmesser oder Dimension sortiert, wird er dann der Sägeanlage zugeführt. Bevor der Stammabschnitt eingeschnitten wird, wird er im Meßrahmen vermessen, wobei die Krümmung und die Ovalität berücksichtigt werden.

Falls auf dem Rundholzplatz die Hauptware bereits vorherbestimmt wurde, so erfolgt nun mit der vermessenen Geometrie eine Wiedererkennung des Stammabschnittes. Falls Massensortimente gefertigt werden, wird das am besten passende Haupterzeugnis bestimmt.

Für die verbleibende Seitenware werden anschließend die Brettstärken bestimmt, die zur optimalen Wertschöpfung führen. Um auf die Ovalität und die Krümmung des Stammabschnittes optimal einzugehen, werden gemäß dem erfindungsgemäßen Verfahren auch asymmetrische Schnittbilder berechnet. Dabei kann es vorkommen, daß im Nachschnitt auf der einen Seite nur ein 18 und ein 24 mm Brett anfallen, auf der anderen Seite jedoch ein 18 und ein 30 mm Brett geschnitten werden. Hätte man beidseitig 18 und 24 mm geschnitten, wäre zuviel Abfall angefallen. Mit 18 und 30 mm auf beiden Seiten wäre aus einem 18 mm Brett nur eine Schwarte geworden.

Gemäß dem erfindungsgemäßen Verfahren wird mit der erfindungsgemäßen Vorrichtung bestmögliche Ausnutzung bzw. Wertschöpfung für den Stammabschnitt berechnet. Hierbei kann es vorkommen, daß an der Stammaußenseite Kürzungsbretter optimal sind, deren Erzeugung einen weiteren Durchgang aus der Maschine aus wirtschaftlichen Aspekten nicht erlauben. Darum wird nach dem erfindungsgemäßen Verfahren eine Durchgangsoptimierung durchgeführt. Besteht eine Säge 13 aus vier einzeln verfahrbaren Sägen, so lassen sich pro Durchgang vier Haupt- oder Nebenerzeugnisse produzieren. Im letzten Durchgang ist es infolge des fertig werdenden Hauptproduktes eines mehr. Bei fünf Durchgängen entstehen somit 21 Erzeugnisse.

Will man eine besonders hohe Leistung (Durchsatz) erzielen, so wird nach dem erfindungsgemäßen Verfahren die Anzahl der Durchgänge minimiert. Dabei werden z.B. als Seitenware entstehende Kürzungslatten nicht ausgesägt, da der Schnitt etwa das zehnfache des Lattenpreises beträgt.

Gemäß dem vorliegenden Verfahren wird mit einer vorgegebenen Menge an Durchgängen eine maximale Anzahl an Brettern geschnitten und zwar unter Ausnutzung jeder einzelnen verfügbaren Säge. Neben dem Haupterzeugnis werden darum im gleichen Durchgang möglichst viele Nebenerzeugnisse geschnitten. Dies wird anhand von Fig. 7 deutlich. Bei mehrstieligen Haupterzeugnissen sind (nicht gezeigte) Brettabscheider vorhanden um sicherzustellen, daß das Haupt- vom Nebenerzeugnis getrennt wird. Sind bei einem zweistieligen Haupterzeugnis drei Bretter möglich, so werden zwei Bretter auf der Seite geschnitten, die den größeren Wert ergibt (Fig. 7B).

Diese Asymmetrie beim Schnitt gilt auch für die asymmetrische Steuerung der Fräser (Spaner), die ebenfalls nach dem erfindungsgemäßen Verfahren gesteuert werden, wie dies die Fig. 7E und 7F zeigen.

Nachdem - wie oben beschrieben - für den gerade vermessenen Stammabschnitt die Schnittdaten berechnet wurden, werden diese Daten an die Säge weitergegeben, die sich dadurch in die Lücken zwischen zwei Stammabschnitten verstellt. Daraufhin kann der Schnitt erfolgen.

Selbstverständlich kann auch eine Nachkalkulation der tatsächlich erzielten Produkte im Rechner erfolgen.

Das erfindungsgemäße Verfahren bzw. die erfindungsgemäße Vorrichtung lassen sich nicht nur auf die Produktion von Bauholz (oder anderer auftragsbezogener Ware) anwenden, sondern auch bei der Produktion von Massensortimenten. Auch hierbei ergibt sich eine Maximierung der Wertschöpfung dadurch, daß man über die Eingabeeinheiten zwei Prioritäten als Faktoren eingeben kann, die dann bestimmen, welche Produkte mit Vorrang auszuwählen sind. Dabei wird gleichzeitig das anfallende Nebenerzeugnis ebenfalls hinsichtlich seiner Wertschöpfung maximiert. Erwünschte Baumkanten, Breiteneinstufen an den Brettern des Nebenerzeugnisses usw. können außerdem ohne weiteres berücksichtigt werden.

### Bezugszeichenliste

1 Rechner
2 Eingabetastatur
3 Bildschirm
4 Druckerz
5 Haupterzeugnis
6 Nebenerzeugnis
7 Kernbrett
8 Schwarte
9 Stamm
10 Säge
11, 12 Einstellelement
13 Sägeeinheit
17 Meßrahmen
18 Zuführförderer
19 Abführförderer
20 Rückführförderer
21 Pufferspeicher
22 Fräser (Spaner)
23 Einstellelement
24 Fühler
25 Fördermotor

26 Doppelbesäumer
27 Einstellelement
28 Box
29 Weiche
30 Zentrierrollen
31 Weiche

## Ansprüche

1. Verfahren zum Steuern ferneinstellbarer Sägen (Reduzierbandsägen, Kreissägen) in Holz-Sägewerken,
mit einem Rechner mit Eingabeeinheit (Tastatur) und Ausgabeeinheit (Bildschirm, Drucker) zum Eingeben von Daten (Abmessung, Qualität, Preise, Kosten, Prioritäten) gewünschter Haupterzeugnisse (HA), der mit den Sägen und mit Förderern zum Zuführen, gegebenenfalls Zurückführen und zum Abführen der Stämme in steuernder Verbindung steht,
mit mindestens einem Meßsystem zum (dreidimensionalen) Abtasten der Stammquerschnitte über deren Länge, der mit dem Rechner verbunden ist,
**dadurch gekennzeichnet,**
daß die Daten (Abmessungen, Qualität, Preise, Schnittkosten)einer Vielzahl möglicher Nebenerzeugnisse (NE) eingegeben und gespeichert werden,
daß die Stammquerschnitte über die Länge jedes den Sägen zugeführten Stammes im wesentlichen direkt vor dem Sägen abgetastet, gespeichert und mit den Daten gewünschter Erzeugnisse (HA) derart verglichen werden, daß die Dimensionen der nach einem Herausschneiden eines gewünschten Haupterzeugnisses (Kantholz, Blockware, Bohlen) verbleibenden Stammabschnitte gespeichert werden,
daß die Daten der möglichen Nebenerzeugnisse (NE) mit den Dimensionen (Dicke, Breite, Länge) der verbleibenden Stammabschnitte derart verglichen werden, daß die maximal mögliche Anzahl möglichst hochwertiger Nebenerzeugnisse bei möglichst niedrigen Schnittkosten gespeichert werden,
daß aus den so ermittelten (Optimal-) Daten die (Verstell-) Werte zum Einstellen der Sägen ermittelt und gespeichert werden, und
daß die Sägen gemäß den ermittelten Daten (von der Stammaußenseite beginnend) eingestellt und die Stämme geschnitten werden.

2. Verfahren nach Anspruch 1,
**dadurch gekennzeichnet,**
daß die Stämme nach dem Abtasten und vor dem Sägen Fräsern zugeführt werden und daß die Fräser entsprechend den ermittelten Daten zur Erzeugung der Außenfläche der (stammäußeren) ersten Produkte eingestellt werden.

3. Verfahren nach einem der vorhergehenden Ansprüche,
**dadurch gekennzeichnet,**
daß die geschnitten Produkte Kappsägen und/oder Besäumern zugeführt werden und daß die Kappsägen bzw. Besäumer entsprechend den ermittelten Produktdaten vom Rechner ferneingestellt werden.

4. Verfahren nach einem der vorhergehenden Ansprüche,
**dadurch gekennzeichnet,**
daß nach dem Ermitteln der Optimaldaten die erzielbaren Haupt- und Nebenerzeugnisse (HA, NE) auf der Ausgabeeinheit (Bildschirm) angegeben werden und daß dann, wenn über die Eingabeeinheit ein entsprechender Befehl gegeben wird, die zweitbeste Lösung für die Aufteilung der Nebenerzeugnisse über den Vergleich mit den gespeicherten Daten ermittelt, angezeigt und gegebenenfalls zur Einstellung der Sägen weitergegeben wird.

5. Verfahren nach einem der vorhergehenden Ansprüche,
**dadurch gekennzeichnet,**
daß die Daten zu einem (Kunden-) Auftrag gehörender Haupterzeugnisse eingegeben und gespeichert werden, daß die Stämme auf dem Rundholzplatz über ein weiteres Meßsystem dreidimensional abgetastet, die gemessenen Daten gespeichert und die Stämme dem Auftrag entsprechend (gegebenenfalls nach Kappen) aussortiert und zwischengespeichert werden.

6. Verfahren nach Anspruch 5,
**dadurch gekennzeichnet,**
daß die Daten der zwischengespeicherten Stämme mit den beim zweiten Abtasten (im wesentlichen direkt vor dem Sägen) ermittelten Daten verglichen und einem Auftrag zur Ermittlung der gewünschten Haupterzeugnisse zugeordnet werden (Wiedererkennung).

7. Sägeanlage mit mindestens einer ferneinstellbaren Säge (13), insbesondere Reduzierbandsäge oder Kreissäge, mit Einstellelementen (11, 12) zum Einstellen der Schnittlage, mit Zuführförderer (18) und Abführförderer (19)
**gekennzeichnet** durch folgende Merkmale

a) ein Rechner (1) steht in steuernder Verbindung mit den Einstellelementen (11, 12) der Säge(n) (13);

b) ein Meßsystem (17), ist im wesentlichen unmittel bar vor der Sägeanlage (10) beim Zuführförderer (17) derart angeordnet ist, daß aufgegebene Stämme (9) das Meßsystem (17) durchlaufen;

c) das Meßsystem (17) und der Zuführförderer (9) sind derart mit dem Rechner (1) (eingangsseitig) verbunden, daß der Querschnitt des Stammes (9) über seine Länge vom Rechner abtast- und speicherbar ist;

d) der Rechner (1) ist mit einer Dateneingabeeinheit (2) zur Eingabe von Daten (Abmessungen, Qualität, Preis, Prioritäten) der zu - schneidenden Haupterzeugnisse (5) und einer Vielzahl möglicher, gewünschter Nebenerzeugnisse (6) verbunden und derart ausgebildet, daß die gemessenen mit den eingegebenen Daten verglichen werden, daß die Dimensionen der nach einem Herausschneiden eines gewünschten Haupterzeugnisses (5) verbleibenden Stammabschnitte gespeichert werden, daß die Daten der möglichen Nebenerzeugnisse (6) mit den Dimensionen (Dicke, Breite, Länge) der verbleibenden Stammabschnitte derart verglichen werden, daß die maximal mögliche Anzahl möglichst hochwertiger Nebenerzeugnisse bei möglichst niedrigen Schnitt kosten gespeichert werden, daß aus den so ermittelten (Optimal-) Daten die (Verstell-) Werte zum Einstellen der Sägen (13) ermittelt und gespeichert werden, und daß die Sägen (13) über ihre Einstellelemente (11, 12) gemäß den ermittelten Daten (von der Stammaußenseite beginnend) eingestellt und die Stämme (9) unter entsprechender Steuerung des Zuführförderers (18) geschnitten werden.

8. Sägeanlage nach Anspruch 7,
**dadurch gekennzeichnet,**
daß vor der Säge (13) ein Paar von ferneinstellbaren Fräsern (22) vorgesehen ist, deren Einstellelemente (23) mit dem Rechner zum (zweiseitigen) Abfräsen der Schwarte (8) in gesteuerter Verbindung stehen.

9. Sägeanlage nach einem der Ansprüche 7 oder 8,
**dadurch gekennzeichnet,**
daß hinter der Säge (13) mindestens eine ferneinstellbare Kappsäge und/oder ein ferneinstellbarer Doppelbesäumer (26) angeordnet ist bzw. sind, dessen Einstellelemente (17) mit dem Rechner (1) zum Besäumen (Kappen) von Haupt- und/oder Nebenerzeugnissen (5, 6) in gesteuerter Verbindung stehen.

10. Sägeanlage nach einem der Ansprüche 7 bis 9,
**dadurch gekennzeichnet,**
daß ein weiterer, mit dem Rechner (1) verbundener Meßrahmen o.dgl.auf dem Rundholzplatz vorgesehen ist, über den ein Gruppe von Stämmen (9) einem im Rechner (1) gespeicherten Auftrag zuweisbar und danach in einem Zwischenspeicher vor dem Aufgeben auf den Zuführförderer (18) zwischenspeicherbar ist.

Fig. 1

Fig. 2

## Fig. 3

H

B

## Fig. 4

-5-

8

6'

6

Fig. 5

A

B

-5-

-5-

0 291 737

Fig. 6A

0 291 737

Fig. 6B

## Fig. 7

A   -5-   6   6

B   -5- -5-   6   6

C   -5- -5- -5-   6   6

D   5 5 5 5

E   8   8   8   6'   6''   5   5   6'''

F   8   8'   8   6   6'   5   5   6''

Fig. 8

A

B

C

D

Fig. 9

| **EINSCHLÄGIGE DOKUMENTE** | | | EP 88106762.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
| A | EP - A1 - 0 185 397 (AIHIKO)<br>* Gesamt *<br>---- | 1 | B 27 B 1/00 |
| | | | **RECHERCHIERTE SACHGEBIETE (Int. Cl.4)**<br><br>B 27 B |
| Der vorliegende Recherchenbericht wurde für alle Patentansprüche erstellt. | | | |

| Recherchenort | Abschlußdatum der Recherche | Prüfer |
|---|---|---|
| WIEN | 13-08-1988 | TRATTNER |